# FASCICULE DE BREVET EUROPEEN

(11) **EP 3 221 271 B1**
(45) Date de publication et mention de la délivrance du brevet: **01.01.2020**
(21) Numéro de dépôt: 15798053.3
(22) Date de dépôt: 19.11.2015
(51) Int. Cl.: C03B 35/18, C03B 18/10, C03B 18/18, C03B 18/22, C03B 18/06

(54) **DISPOSITIF DE MANIPULATION DU BORD D'UN RUBAN DE VERRE FLOTTE, COMPRENANT UNE MOLETTE A AXE INCLINE, ET INSTALLATION COMPORTANT UN TEL DISPOSITIF**
VORRICHTUNG ZUR HANDHABUNG DER KANTE EINES FLOATGLASBANDES MIT RAD MIT GENEIGTER ACHSE UND INSTALLATION MIT EINER DERARTIGEN VORRICHTUNG
DEVICE FOR HANDLING THE EDGE OF A RIBBON OF FLOAT GLASS, COMPRISING AN INCLINED-AXIS WHEEL, AND INSTALLATION COMPRISING SUCH A DEVICE

(30) Priorité: 19.11.2014 BE 201405070
(43) Date de publication de la demande: 27.09.2017
(73) Titulaire: Fives Stein, 94700 Maisons Alfort (FR)
(72) Inventeur: MAGBAG, Apolonio, B-1050 Ixelles (BE); NEDJAR, Mustapha, B-4252 Omal (BE); AVDIJAJ, Hasan, B-1080 Molenbeek Saint-Jean (BE)
(74) Mandataire: IP Trust
(86) Numéro de dépôt international: PCT/EP2015/077154
(87) Numéro de publication internationale: WO 2016/079260

(56) Documents cités:
- WO-A1-2011/098423
- WO-A1-2013/157477
- US-A- 3 713 797
- US-A- 3 850 787
- US-A- 4 343 642

## Description

### Domaine d'application

La présente invention est relative à un dispositif de manipulation du bord d'un ruban de verre pâteux en déplacement sur un bain de métal liquide dans une chambre de flottage, selon le procédé de fabrication de verre plat connu sous le nom de « Verre Flotté » ou « Float Glass ».

La présente invention est définie par les revendications.

Généralement, ce dispositif de manipulation de bord comprend une molette, c'est-à-dire une pièce en forme de disque ou de roue dont la périphérie est garnie de protubérances radiales en forme de dents, également distribuées sur cette périphérie, en une ou plusieurs rangées. Pour chaque rangée, les axes géométriques radiaux des dents sont contenus dans un disque virtuel perpendiculaire à l'axe de la molette. Cette molette est fixée à l'extrémité d'une lance dont elle est mécaniquement solidaire, la lance étant cylindrique de révolution et ayant la forme d'une longue tige. La lance est supportée en étant insérée à l'intérieur d'une pièce creuse appelée canon, également cylindrique de révolution. Le canon est fixe en rotation selon son axe cylindrique, alors que la lance et par conséquent la molette fixée à son extrémité sont mises en rotation selon l'axe de la lance par un mécanisme permettant de contrôler une vitesse variable.

### Etat de l'art, imperfections de l'état de l'art et problème technique à résoudre

Ce dispositif, que nous dénommeront ici « dispositif de bord », mais qui selon les régions et les langages peut prendre notamment le nom d' « atténuateur », de « top-roll » ou « top-roller » ou de « machine de bord », est généralement installé en bordure d'une chambre de flottage comprenant un bain de métal en fusion comme par exemple de l'étain. Du verre en fusion à l'état pâteux est déversé en continu à une température d'environ 1000°C sur ce bain de métal en fusion, de manière à laisser le verre flotter, s'étaler et obtenir l'épaisseur souhaitée lorsqu'il est à l'état visqueux, pour enfin refroidir la feuille, ou ruban, de verre ainsi formé à la sortie de la chambre de flottage, afin de le solidifier, avant de le soumettre aux traitements thermiques de l'étenderie.

Le processus est continu en ce sens que, de la sortie du four, là ou se déverse le verre dans la chambre de flottage, à la ligne de découpe du verre, il n'y a qu'un seul et même ruban de verre à des températures et à des états différents.

Les propriétés physico chimiques (température, viscosité, densité, tension de surface, ...) du verre, de l'étain et de l'atmosphère contrôlée du bain, sont telles que, dans les conditions habituelles de production, le verre soumis à la gravité flotte et s'étale à une épaisseur d'environ 5,5 mm, appelée épaisseur d'équilibre naturel.

Les dispositifs de bord ont pour but de modifier les forces d'équilibre du ruban de verre flottant, afin de modifier et d'ajuster à souhait l'épaisseur de verre, comme exposé notamment dans FR-A-2581984. A cet effet, la molette agit par contact et pénétration de la denture périphérique dans l'épaisseur du ruban de verre, à proximité du bord naturel de celui-ci, en créant un guidage du bord du ruban, selon une direction déterminée, soit pour éloigner le bord du ruban du centre de celui-ci lorsque l'on veut augmenter la largeur du ruban, soit pour rapprocher le bord du ruban du centre de celui-ci lorsque l'on veut diminuer la largeur du ruban, cela tout en accompagnant le déplacement du ruban de verre par une rotation de la molette selon son axe avec une vitesse circonférentielle proche de la vitesse de déplacement naturel du ruban de verre à cet endroit. On appelle « plan de rotation de la molette » le plan du disque contenant les axes radiaux des dents, ou selon l'application dans le cas de plusieurs rangées de dents, le plan milieu des disques contenant les axes radiaux des dents.

Les dispositifs de bord sont placés par paires de part et d'autre de la chambre de flottage et leurs molettes dentées entrainent et guident les bords du ruban en flottation.

La rotation de la molette permet d'accompagner le bord du ruban de verre dans son écoulement sur la surface de l'étain, dans la direction globale naturelle du procédé. L'effet d'augmentation, diminution ou maintien de la largeur du ruban est obtenu par l'angle que la molette impose à l'écoulement du bord du ruban. Par convention, on décrit en général cet angle comme positif pour un élargissement du ruban et négatif pour un rétrécissement de celui-ci. La direction effective selon laquelle se déplacent les dents de la molette en contact et en pénétration dans le bord du ruban est appelée « direction efficace » du dispositif de bord. En pratique, par simplification géométrique, on détermine cette direction comme l'intersection du plan de la surface supérieure du ruban de verre et du plan de rotation de la molette. On appellera communément « angle efficace » du dispositif de bord, l'angle formé par la « direction efficace » et l'axe du bain généralement nommé axe X, qui est l'axe selon lequel le ruban de verre se déplace globalement et qui est identique à l'axe principal du bain.

Pour une bonne compréhension de l'effet des molettes sur le bord du ruban de verre, il faut également prendre en compte l'angle formé par le plan de rotation de la molette et un plan vertical contenant la « direction efficace ». Cet angle sera nommé « angle d'emprise » et sera par convention positif pour une inclinaison du plan de rotation de la molette vers le centre du ruban. Donc, le cas d'un angle d'emprise positif, les dents pénétrant dans le bord du ruban sont inclinées par rapport à la verticale, et leurs sommets sont orientés vers l'extérieur du ruban

Les forces d'équilibre du ruban tendent à ramener lentement le ruban de verre à son état d'équilibre naturel dès que les bords ne sont plus directement contraints par une molette. Il est donc nécessaire de maintenir ou augmenter l'effet obtenu par la première paire de dispositifs de bord, en installant des dispositifs de bord successifs selon l'axe du procédé.

D'une manière générale, plus l'épaisseur produite s'éloigne de l'épaisseur naturelle, plus on doit adjoindre de paires de dispositifs de bord. Ce nombre est fréquemment par exemple de 7 paires dans une ligne de production de verre flotté de dimensions courantes pour l'industrie du bâtiment, mais peut atteindre 20 paires ou plus dans les lignes de production de verre extra mince (inférieur à 0,75 mm).

Les dispositifs de bord ont actuellement généralement une architecture de deux types: au sol ou suspendus. Ils présentent sensiblement les mêmes fonctions si ce n'est que les dispositifs suspendus présentent l'avantage d'un encombrement réduit au sol, avec une stabilité supérieure car indépendante des imperfections et inégalités du sol.

Les dispositifs de bord sont équipés de mécanismes auxiliaires permettant de positionner dans divers axes la molette qui vient entraîner le bord du ruban de verre flottant. Ces mécanismes sont installés sur un châssis fixé le long de la chambre de flottage. Nous nommerons machine l'ensemble constitué du châssis, des mécanismes de positionnement et du dispositif de bord proprement dit.

L'on nomme généralement X la direction horizontale de l'axe du procédé, identique à l'axe principal du bain d'étain; Y l'axe perpendiculaire à X dans le même plan horizontal, et Z la direction verticale. Pour chaque dispositif de bord, on nomme « plan d'angulation » un plan vertical contenant l'axe de rotation de la molette, qui dans la forme de réalisation classique est confondu avec l'axe longitudinal de la lance.

Les dispositifs de bord permettent généralement cinq mouvements de la lance à l'extrémité de laquelle est fixée la molette :
1. Une rotation de l'ensemble lance-molette dans le canon, autour de l'axe longitudinal de la lance, à vitesse variable ;
2. Un mouvement d'angulation, aussi appelé « slew », généré par le pivotement de l'ensemble du châssis supportant le dispositif de bord autour d'un axe vertical nommé axe d'angulation, concourant avec l'axe de la lance et situé à proximité immédiate du bord du bain d'étain. L'angle dénommé angle d'angulation, qui est l'angle entre le plan d'angulation et Y, peut atteindre plus ou moins 20° dans les cas extrêmes. Ce mouvement est destiné à générer sur le bord du ruban de verre la « direction efficace », et, dans la forme de réalisation classique, la valeur de l' « angle efficace » est égale à la valeur de l'angle d'angulation.
3. Un mouvement de pénétration (avance-retrait) de l'ensemble canon-lance-molette dans l'enceinte du bain d'étain, généré par le déplacement du dispositif de bord par un guidage sur rails selon l'axe intersection du plan d'angulation et du plan horizontal;
4. Un mouvement de montée/descente généré par la montée/descente de l'ensemble canon-lance-molette suivant Z par rapport au châssis;
5. Un mouvement de pinçage ou plongée, généré par pivotement du canon relativement au châssis du dispositif de bord, selon un axe horizontal perpendiculaire au plan d'angulation, avec possibilité, dans certains cas, de dépinçage rapide (dégagement d'urgence de la molette du verre). L'angle de plongée est défini comme l'angle entre l'horizontale et l'axe géométrique longitudinal du canon, et est positif lorsque la lance portant la molette est inclinée vers le centre du bain d'étain. L'angle d'emprise sur le bord du ruban, dans la forme de réalisation classique, est donc directement lié et égal à l'angle de plongée. Dans la forme de réalisation classique, lorsque la molette est en contact avec le verre, l'angle de plongée peut être compris entre 0 et 2 à 3°.

Généralement, les dispositifs de bord sont placés par paire, les deux machines en vis-à-vis de part et d'autre du bain d'étain, l'axe d'angulation de chacune des deux machines étant compris dans un même plan perpendiculaire à l'axe X du procédé.

Pour du verre épais, d'épaisseur supérieure à l'épaisseur d'équilibre naturel, soit environ 5,5 mm, les vitesses de rotation des molettes sont décroissantes dans le sens de défilement du ruban de verre et les angles d'angulation négatifs tendent à contenir l'étalement du ruban de verre en largeur.

Pour du verre mince, d'épaisseur inférieure à l'épaisseur d'équilibre naturel, soit environ 5,5 mm, les vitesses de rotation de la molette sont croissantes dans le sens de défilement du ruban de verre et les angles d'angulation positifs tendent à augmenter l'étalement du ruban de verre en largeur.

Les différents mouvements de ces dispositifs peuvent être entièrement motorisés et des codeurs absolus permettent de connaître la position exacte des éléments mobiles de chaque dispositif.

La molette est en général dentée à sa périphérie, mais l'on peut rencontrer des molettes sous forme de simple disque. Leur diamètre est par exemple de l'ordre de 180 à 260 mm, et elles sont généralement soudées ou vissées sur la lance, qui est mise en rotation autour de son axe géométrique longitudinal.

La lance tourne sur elle-même dans le canon qui est fixe en rotation. A l'extrémité du canon destinée à pénétrer dans la chambre de flottage, donc du côté de la molette, la lance est maintenue par un palier lisse, par exemple une bague en carbone. A l'autre extrémité du canon, la lance est supportée par un palier à roulement à billes. Le canon est refroidi par un circuit de refroidissement d'eau et l'ensemble lance-molette également, par un circuit de refroidissement distinct. Afin de pouvoir positionner la molette sur le bord du ruban de verre à l'intérieur du bain, à une pénétration maximum atteignant 3 à 4m, la lance est généralement d'une grande longueur, par exemple de l'ordre de 4 à 5m, le canon étant généralement un peu plus court, de manière que la lance projette la molette à une distance d'environ 50cm de l'extrémité du canon.

La lance et la molette sont entrainées en rotation via un moteur électrique, et généralement, les molettes d'une même paire tournent à la même vitesse mais suivant l'application, elles peuvent également tourner à des vitesses légèrement différentes.

Tous ces dispositifs de bord connus présentent l'inconvénient majeur de nécessiter un espace important à l'extérieur du bain d'étain. En effet, afin de pouvoir extraire complètement la lance et la molette hors de l'enceinte du bain d'étain, on utilise le mouvement de pénétration, qui doit donc avoir une course suffisamment supérieure à la longueur de pénétration maximum de la molette dans le bain. Ce mouvement de pénétration est réalisé par guidage linéaire sur un châssis extérieur au bain, dont la longueur dépasse généralement la course de pénétration de 1 à 2m.

De plus, pour orienter la molette par rapport au ruban de verre et notamment pour effectuer les mouvements d' « angulation », et donc générer une « direction efficace », l'ensemble de la machine doit pivoter sur l'axe d'angulation placé à proximité immédiate du bord de la chambre de flottage, ce qui induit un déplacement important selon l'axe X de l'extrémité du châssis de la machine opposée à la molette. Ce déplacement important est lié à la longueur de la lance et peut atteindre 1,5 m selon X de part et d'autre par rapport à la position d'angulation nulle. De ce fait, lorsque deux paires de machines sont placées à faible distance l'une de l'autre dans la direction du procédé, l' « angulation » que peut prendre la seconde paire par rapport à la première est limité par l'interférence des parties arrières des deux machines. Ce cas de figure est assez fréquent lors des productions de verre mince ou ultra-mince avec des vitesses de ruban assez faibles.

Lors des changements d'angulation, la position en X de la molette dans le bain d'étain varie également d'autant plus fort que la pénétration est importante, ce qui modifie la distribution en X des points d'action sur les bords du ruban, et rend donc les différentes combinaisons de paramètres non auto-semblables selon X. Cela perturbe l'analyse visuelle des gestionnaires du procédé, et rend complexe l'utilisation d'une surveillance vidéo du procédé, puisque les molettes sont susceptibles de quitter le champ des caméras lors d'un changement d'angulation. Les différentes combinaisons de paramètres ne sont donc pas non plus auto-semblables selon le profil de la courbe de température du ruban de verre, ce qui rend également les analyses du procédé plus complexes.

### Solution possible aux imperfections de l'état de l'art et problème technique à résoudre

Pour résoudre ces problèmes, on peut choisir de créer le mouvement d'angulation, et par conséquent la direction efficace, non pas en déplaçant l'ensemble de la machine, mais simplement en positionnant l'axe d'angulation de la molette à l'extrémité du canon, la lance devenant si courte qu'elle se confond avec l'axe de la molette, comme exposé dans WO 2011098423.

Dans cette solution, l'axe de rotation de la molette est concourant avec celui du canon, et les cinq mouvements de la molette relativement au bain d'étain peuvent par exemple être réalisés comme suit, sachant que pour chaque machine, par similitude avec la forme de réalisation classique, on nommera plan d'angulation un plan vertical contenant l'axe de rotation de la molette.
1. La rotation de la molette est réalisée à l'extrémité du canon, alors que le canon reste fixe et que son axe longitudinal reste contenu en permanence soit dans un plan vertical perpendiculaire à X, soit dans un plan vertical formant un angle avec le plan vertical perpendiculaire à X. Cet angle sera nommé « angle de base », et sera positif lorsque son effet sur l'angle efficace sera également positif. La rotation de la molette est générée par un système intégré ou par une transmission flexible autorisant un décalage angulaire entre l'axe de rotation de la molette et l'axe géométrique longitudinal du canon. Par rapport à un dispositif classique, le fait que le canon reste dans la même position en permanence permet d'éviter toutes les interférences entre machines successives liées à la création de l'angulation.
2. Le mouvement d'angulation, est généré par le pivotement du support de la molette à l'extrémité du canon, selon un axe concourant et perpendiculaire à l'axe du canon et compris dans un plan vertical. L'angle dénommé angle d'angulation, qui est l'angle entre le plan de rotation de la molette et un plan perpendiculaire à l'axe du canon, et qui est identique à l'angle formé par l'axe longitudinal du canon et l'axe de rotation de la molette, sera réglable de +20 à -20° dans les cas extrêmes. L'angle efficace du procédé est donc la somme de l'angle de base et de l'angle d'angulation.
3. Le mouvement de pénétration (avance-retrait) de l'ensemble canon-molette dans l'enceinte du bain d'étain est généré comme classiquement par le déplacement du dispositif de bord par un guidage sur rails selon un axe parallèle à Y;
4. Le mouvement de montée/descente est généré comme classiquement par la montée/descente suivant Z de l'ensemble canon-molette par rapport au châssis;
5. Le mouvement de pinçage ou plongée est généré comme classiquement par pivotement du canon relativement au châssis du dispositif de bord, selon un axe horizontal parallèle à X, avec possibilité, dans certains cas, de dépinçage rapide (dégagement d'urgence de la molette du verre).

Les mouvements ainsi que la structure de la machine qui les réalise, sont donc inchangés en ce qui concerne les points 3, 4 et 5 ci-dessus.

Cette solution nécessite d'intégrer dans un volume réduit à l'extrémité du canon des mécanismes très complexes permettant d'une part de générer ou de transmettre de manière homocinétique le mouvement de rotation de la molette, d'autre part de maitriser un angle variable de l'axe de rotation de la molette par rapport à l'axe du canon, dans un environnement hostile nécessitant un circuit de refroidissement compliqué.

### Description détaillée de l'invention

L'invention permet d'atteindre le même objectif de création d'une direction efficace réglable tout en maintenant le canon dans la même position en permanence comme exposé dans WO 2011098423. Cependant, cet objectif est atteint avec une réalisation simplifiée présentant quasi les mêmes avantages au prix d'une complexité diminuée. Pour cela, on prévoit, suivant l'invention, un dispositif de manipulation du bord d'un ruban de verre pâteux en déplacement sur un bain liquide dans une chambre de flottage, comprenant une molette disposée à une extrémité distale d'un canon, caractérisé d'une part en ce que la molette est rotative autour de son axe propre et, d'autre part, en ce que cet axe de rotation de la molette fait avec l'axe géométrique longitudinal du canon un angle fixe, permanent, différent de zéro, non modifiable par réglage et dont la valeur est déterminée par construction, idéalement de la valeur d' « angle efficace » maximum nécessité par le procédé, comme par exemple 15°. On nommera « angle d'inclinaison » l'angle fixe permanent entre l'axe longitudinal du canon et l'axe de rotation de la molette.

Selon l'invention, les cinq mouvements de la molette relativement au bain d'étain peuvent par exemple être réalisés comme suit:
1. La rotation de la molette est réalisée à l'extrémité du canon, alors que le canon reste fixe et que son axe longitudinal reste contenu en permanence soit dans un plan vertical perpendiculaire à X, soit dans un plan vertical formant un angle avec le plan vertical perpendiculaire à X. Cet angle sera nommé « angle de base », et sera positif lorsque son effet sur l'angle efficace sera également positif. La rotation de la molette est générée par un système intégré ou par une transmission flexible autorisant un décalage angulaire entre l'axe de rotation de la molette et l'axe géométrique longitudinal du canon.
2. La « direction efficace », caractérisée par l' « angle efficace », est générée par la rotation du canon selon son propre axe longitudinal, modifiant l'orientation du plan de roation de la molette à l'extrémité du canon. Pour rappel, la direction efficace est déterminée comme l'intersection du plan de la surface supérieure du ruban de verre et du plan de rotation de la molette. L'angle efficace peut ainsi atteindre au maximum plus ou moins la valeur de l' « angle d'inclinaison » fixe et permanent, additionné de la valeur de l'angle de base.
3. Le mouvement de pénétration (avance-retrait) de l'ensemble canon-molette dans l'enceinte du bain d'étain est généré comme classiquement par le déplacement du dispositif de bord par un guidage sur rails selon un axe parallèle à Y;
4. Le mouvement de montée/descente est généré comme classiquement par la montée/descente suivant Z de l'ensemble canon-molette par rapport au châssis;
5. Le mouvement de pinçage ou plongée est généré comme classiquement par pivotement du canon relativement au châssis du dispositif de bord, selon un axe horizontal parallèle à X, avec possibilité, dans certains cas, de dépinçage rapide (dégagement d'urgence de la molette du verre).

Il faut noter que par rapport à la solution classique, ou celle présentée dans WO 2011098423, la direction efficace du dispositif de bord est créée par l'orientation du plan de rotation de la molette par rapport à l'axe longitudinal du canon, et que par conséquent l'angle d'emprise varie également dans une plage nettement plus étendue de valeurs. Cette plage de l'angle d'emprise s'étendra de plus à moins la valeur de l' « angle d'inclinaison », additionné de la valeur de l'angle de plongée.

L'invention est également relative à une installation de production de verre plat flotté, comprenant une chambre de flottage dans laquelle se déplace un liquide sur lequel du verre fondu pâteux est amené à flotter et à s'étaler en formant un ruban, caractérisée en ce qu'elle comporte au moins un dispositif de manipulation de bord du ruban de verre tel que défini précédemment.

### Description détaillée d'une réalisation possible selon l'invention

L'invention consiste, en plus des dispositions de principe exposées ci-dessus; en un certain nombre d'autres dispositions présentées dans des exemples de réalisation décrits ci après avec référence aux dessins annexés, mais qui ne sont nullement limitatifs. Sur ces dessins :

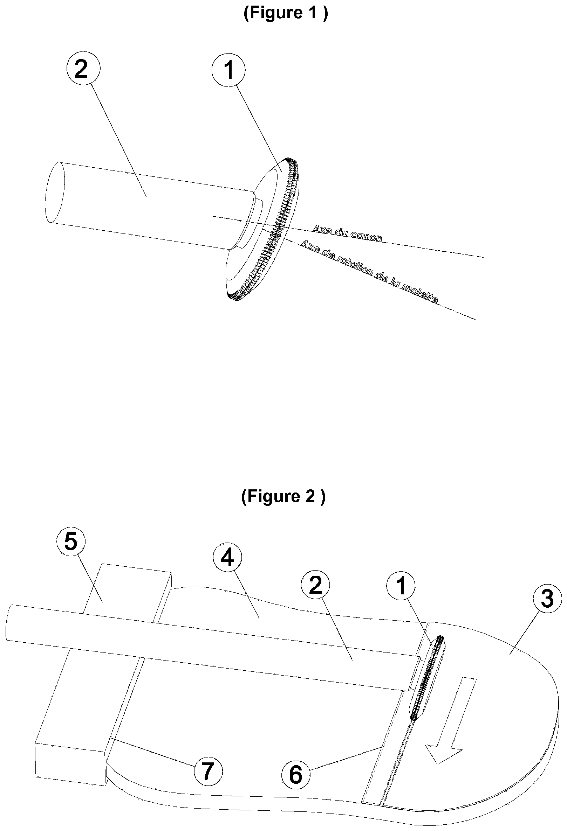

La Fig.1 représente une vue de principe, d'une forme de réalisation de dispositif de manipulation de bord suivant l'invention, où l'on voit que la molette (1) est installée à l'extrémité d'un canon (2), de manière que l'axe de rotation de la molette soit incliné d'un angle d'inclinaison fixe différent de 0° par rapport à l'axe du canon (2). La molette est rotative autour de son axe propre et elle est montée de manière que cet axe de rotation sur elle-même soit concourant avec l'axe géométrique longitudinal du canon et forme avec celui-ci un angle fixe non nul, permanent, non modifiable par réglage et dont la valeur est déterminée par construction. La valeur de cet angle est comprise entre 5 et 30°, de préférence entre 15 et 20° pour la plupart des cas.
La Fig.2 représente une utilisation possible d'une forme de réalisation de l'invention, dans une situation d'étalement d'un ruban de verre pâteux (3) sur la surface d'étain (4), une flèche indiquant le sens de défilement du ruban de verre selon le procédé. L'axe du canon (2) est compris dans un plan vertical perpendiculaire à l'axe du procédé, créant un angle de base de 0°. Les dents de la molette (1) pénètrent par la surface supérieure dans le ruban de verre (3) à proximité du bord (6) de celui-ci, afin de contrôler son étalement, ici selon une direction efficace de 0°. A cet effet, le canon (2) est positionné en rotation de manière que le plan formé par l'axe du canon et l'axe de rotation de la molette soit vertical et que la face de la molette soit tournée vers la surface supérieure du ruban de verre. L'angle d'emprise est dans ce cas maximum et égal à l'angle d'inclinaison. Le bord du ruban de verre est présenté rectiligne pour la facilité de représentation, et faisant un angle de 0° par rapport au bord (7) de la rive (5) du bain d'étain, bien qu'en réalité le bord du ruban présente une courbure variable en tout point dépendant de l'équilibre des forces en jeu dans la feuille de verre.

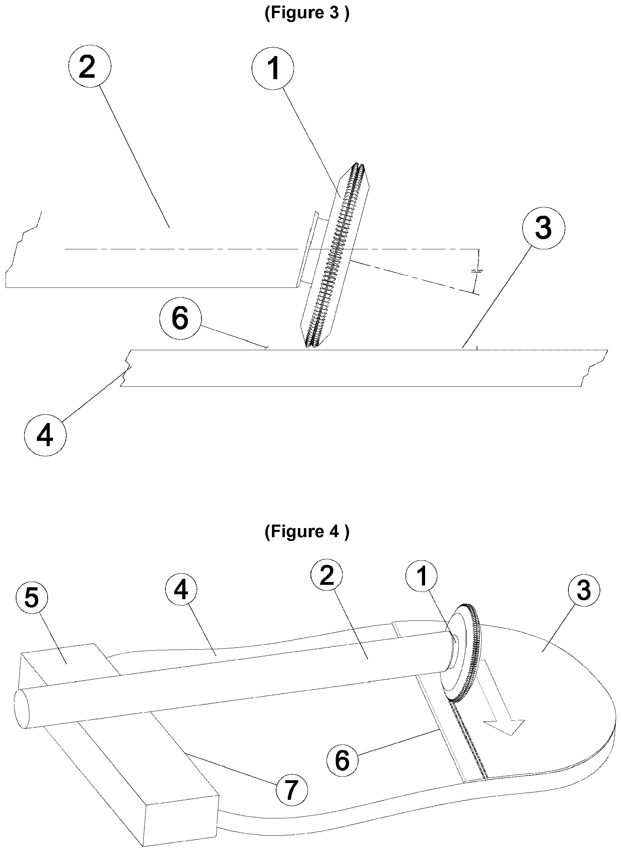

La Fig.3 représente une vue en coupe perpendiculaire à l'axe X du bain, dans la situation de la Fig.2. On perçoit que l'angle entre le plan de rotation de la molette et un plan horizontal est égal à la valeur de l'angle d'inclinaison de la molette plus l'angle de plongée (angle entre l'axe du canon et un plan horizontal). Ici, à titre d'exemple l'angle d'inclinaison est de 15°et l'angle de plongée est de 0°. Le réglage en rotation du canon est neutre pour la direction efficace, puisqu'il produit un angle efficace de 0°, et nous donnerons donc par convention la valeur 0° à ce réglage en rotation du canon, lorsque la face de la molette est tournée vers la surface supérieur du ruban de verre. Le réglage en rotation du canon est observé de manière antihorlogique depuis le canon vers son extrémité portant la molette. L'angle efficace peut prendre une valeur maximum positive, égale à l'angle d'inclinaison de la molette, pour un réglage du canon égal à 90° et une valeur minimum négative pour un réglage de canon égal à -90°.
La Fig.4 représente une utilisation possible d'une forme de réalisation de l'invention, dans une situation similaire à celle de la Fig.2 sauf que l'angle efficace du procédé présenté ici est de +10°, ce qui correspond à imposer un élargissement du ruban de verre. Le bord du ruban de verre est présenté rectiligne pour la facilité de représentation, et faisant un angle de 10° par rapport au bord (7) du bain d'étain, bien qu'en réalité le bord du ruban présente une courbure variable en tout point dépendant de l'équilibre des forces en jeu dans la feuille de verre. Les dents de la molette (1) pénètrent par la surface supérieure dans le ruban de verre (3) à proximité du bord (6) de celui-ci, afin de contrôler son étalement, ici selon un angle efficace de 10°. A cet effet, le canon (2) est positionné en rotation de manière que le plan formé par l'axe du canon et l'axe de rotation de la molette soit incliné de environ 41° par rapport à un plan vertical et que la face de la molette soit tournée vers la surface supérieure du ruban de verre. Dans cette situation, la valeur de l'angle d'emprise est de 11.23°

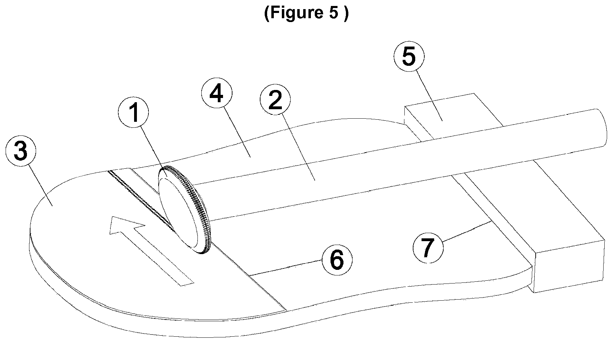

La Fig.5 représente une utilisation possible d'une forme de réalisation de l'invention, dans une situation similaire à celle de la Fig.2 sauf que l'angle efficace du procédé présenté ici est de -5°, ce qui correspond à imposer un rétrécissement du ruban de verre. Le bord du ruban de verre est présenté rectiligne pour la facilité de représentation, et faisant un angle de - 5° par rapport au bord (7) du bain d'étain, bien qu'en réalité le bord du ruban présente une courbure variable en tout point dépendant de l'équilibre des forces en jeu dans la feuille de verre. Les dents de la molette (1) pénètrent par la surface supérieure dans le ruban de verre (3) à proximité du bord (6) de celui-ci, afin de contrôler son étalement, ici selon un angle efficace de -5°. A cet effet, le canon (2) est positionné en rotation de manière que le plan formé par l'axe du canon et l'axe de rotation de la molette soit incliné de environ -19° par rapport à un plan vertical et que la face de la molette soit tournée vers la surface supérieure du ruban de verre. Dans cette situation, la valeur de l'angle d'emprise est de 14.17°

## Revendications

1. Dispositif de manipulation du bord d'un ruban de verre pâteux en déplacement sur un bain liquide dans une chambre de flottage, comprenant d'une part une molette (1), installée à l'extrémité distale d'un canon (2), **caractérisé en ce que** la molette est rotative autour de son axe propre et qu'elle est montée de manière que cet axe de rotation sur elle-même est concourant avec l'axe géométrique longitudinal du canon et forme avec celui-ci un angle fixe non nul, permanent, non modifiable par réglage et dont la valeur est déterminée par construction, ladite valeur étant comprise entre 5 et 30°,et comprenant d'autre part un moyen de génération du mouvement de rotation de la molette.

2. Dispositif selon la revendication 1, **caractérisé en ce que** le canon (2) présente une possibilité de réglage en rotation autour de son axe longitudinal.

3. Dispositif selon la revendication 2, **caractérisé en ce que** le canon (2) a une latitude de réglage en rotation autour de son axe longitudinal de plus ou moins 180° par rapport à une position centrale, celle-ci générant un angle efficace du procédé de 0°.

4. Dispositif selon la revendication 1, **caractérisé en ce que** la molette est entraînée en rotation par un joint de transmission, en particulier homocinétique.

5. Dispositif selon la revendication 1, **caractérisé en ce que** la rotation de la molette est générée à l'intérieur de celle-ci ou de son moyeu par un système électrique, hydrostatique ou hydraulique.

6. Dispositif selon la revendication 2, **caractérisé en ce qu'**un dispositif électromécanique de contrôle de l'orientation du canon est installé pour permettre de créer et maintenir l'orientation effective de l'effet de la molette sur le bord du ruban de verre, c'est à dire pour régler l'angle efficace du procédé..

7. Dispositif selon la revendication 2, **caractérisé en ce qu'**un dispositif de correction automatique, mécanique ou électrique, de la hauteur du canon en fonction de la valeur de son réglage en rotation est installé afin de maintenir constant le niveau du contact entre la molette et le bord du ruban de verre.

8. Dispositif selon la revendication 2, **caractérisé en ce qu'**un dispositif de correction automatique, mécanique ou électrique, de la pénétration du canon en fonction de la valeur de son réglage en rotation est installé afin de maintenir constant en pénétration la position du point de contact entre la molette et le bord du ruban de verre.

9. Dispositif selon l'une quelconque des revendications 1 à 8, **caractérisé en ce que** le canon comporte un ou plusieurs circuits permettant d'amener et collecter un fluide nécessaire au refroidissement de la molette et du canon

10. Dispositif selon l'une quelconque des revendications 1 à 8, **caractérisé en ce que** le canon comporte un ou plusieurs circuits permettant d'amener et collecter un fluide nécessaire au refroidissement du canon et du mécanisme de rotation de la molette, à l'exception de la molette, celle-ci étant constituée d'un matériau résistant aux hautes températures et n'étant pas refroidie par un de ces circuits.

11. Installation de production de verre plat flotté, comprenant une chambre de flottage dans laquelle se trouve un métal en fusion sur lequel du verre fondu pâteux est amené à flotter et à s'étaler en formant un ruban, **caractérisée en ce qu'** elle comporte au moins un dispositif de manipulation de bord du ruban de verre selon l'une quelconque des revendications 1 à 10.

## Patentansprüche

1. Vorrichtung zum Handhaben der Kante eines weichen Glasbands, das sich auf einem Flüssigkeitsbad in einer Floatkammer bewegt, die zum einen ein Rändelrad (1) umfasst, das am distalen Ende eines Zylinders (2) angebracht ist, **dadurch gekennzeichnet, dass** sich das Rändelrad um seine eigene Achse drehen kann und so montiert ist, dass die sich um sich selbst drehende Rotationsachse mit der geometrischen Längsachse des Zylinders zusammenfällt und mit ihr zusammen einen festen, dauerhaften und unveränderlichen Winkel ungleich Null bildet, dessen Wert durch die Konstruktion bestimmt ist, wobei der Wert zwischen 5 und 30° liegt, und andererseits Mittel zum Erzeugen der Drehbewegung des Rändelrads.

2. Vorrichtung nach Anspruch 1, **dadurch gekennzeichnet, dass** der Zylinder (2) eine Möglichkeit zur Einstellung der Drehung um seine Längsachse aufweist.

3. Vorrichtung nach Anspruch 2, **dadurch gekennzeichnet, dass** die Drehung des Zylinders (2) um seine Längsachse in einen Einstellbereich von mehr oder weniger 180° in Bezug auf eine mittige Position verstellt werden kann, wodurch ein wirksamer Winkel des Verfahrens von 0° erzeugt wird.

4. Vorrichtung nach Anspruch 1, **dadurch gekennzeichnet, dass** das Rändelrad durch ein Antriebsgelenk, insbesondere ein Gleichlaufgelenk, in Drehung versetzt wird.

5. Vorrichtung nach Anspruch 1, **dadurch gekennzeichnet, dass** die Drehung des Rändelrads im Innern desselben oder seiner Nabe durch ein elektrisches, hydrostatisches oder hydraulisches System erzeugt wird.

6. Vorrichtung nach Anspruch 2, **dadurch gekennzeichnet, dass** eine elektromechanische Vorrichtung zum Steuern der Ausrichtung des Zylinders installiert ist, um eine wirksame und anhaltende Ausrichtung des Rändelrads auf die Kante des Glasbands zu ermöglichen, d.h. um den wirksamen Winkel des Verfahrens einzustellen.

7. Vorrichtung nach Anspruch 2, **dadurch gekennzeichnet, dass** eine Vorrichtung zur automatischen, mechanischen oder elektrischen Korrektur der Höhe des Zylinders im Hinblick auf den Einstellwert der Drehung installiert ist, um einen gleichmäßigen Kontakt zwischen Rändelrad und Glasbandkante zu gewährleisten.

8. Vorrichtung nach Anspruch 2, **dadurch gekennzeichnet, dass** eine Vorrichtung zur automatischen, mechanischen oder elektrischen Korrektur des Eindringens des Zylinders im Hinblick auf den Einstellwert der Drehung installiert ist, um den Berührungspunkt zwischen Rändelrad und Glasbandkante beim Eindringen in einer gleichmäßigen Position zu halten.

9. Vorrichtung nach einem der Ansprüche 1 bis 8, **dadurch gekennzeichnet, dass** der Zylinder einen oder mehrere Kreisläufe zum Zuführen und Sammeln eines Fluids umfasst, das zum Kühlen des Rändelrads und des Zylinders erforderlich ist.

10. Vorrichtung nach einem der Ansprüche 1 bis 8, **dadurch gekennzeichnet, dass** der Zylinder einen oder mehrere Kreisläufe zum Zuführen und Sammeln eines Fluids umfasst, das zum Kühlen des Zylinders und des Drehmechanismus des Rändelrads erforderlich ist, jedoch nicht für das Rändelrad selbst, da dieses aus einem hochtemperaturbeständigen Material besteht und nicht durch einen dieser Kreisläufe gekühlt wird.

11. Anlage zur Herstellung von gefloatetem Flachglas mit einer Floatkammer, in der sich eine Metallschmelze befindet, auf der das geschmolzenes weiche Glas schwimmt und sich in Form eines Bands ausgebreitet, **dadurch gekennzeichnet, dass** sie mindestens eine Vorrichtung zur Handhabung der Kante des Glasbandes nach einem der Ansprüche 1 bis 10 umfasst.

## Claims

1. A device for handling the edge of a ribbon of glass in viscous form being displaced on a liquid bath in a float chamber, comprising firstly a wheel (1), installed at the distal end of a barrel (2), **characterized in that** the wheel can rotate around its own axis, and is fitted such that this axis of rotation around itself coincides with the longitudinal geometric axis of the barrel, and forms together with the latter a permanent fixed angle other than zero, which can not be modified by regulation, and the value of which is determined by design, said value being between 5 and 30°, and also comprising a means for generation of the movement of rotation of the wheel.

2. The device as claimed in claim 1, **characterized in that** the barrel (2) has the possibility of regulation of its rotation around its longitudinal axis.

3. The device as claimed in claim 2, **characterized in that** the barrel (2) has scope for regulation in rotation around its longitudinal axis of more or less 180° relative to a central position, thus generating an effective angle of the process of 0°.

4. The device as claimed in claim 1, **characterized in that** the wheel is rotated by a transmission seal, which in particular is homokinetic.

5. The device as claimed in claim 1, **characterized in that** the rotation of the wheel is generated inside it or its hub by an electrical, hydrostatic or hydraulic system.

6. The device as claimed in claim 2, **characterized in that** an electromechanical device for control of the orientation of the barrel is installed in order to make it possible to create and maintain the effective orientation of the effect of the wheel on the edge of the ribbon of glass, i.e. in order to regulate the effective angle according to the process.

7. The device as claimed in claim 2, **characterized in that** a device for automatic mechanical or electrical correction of the height of the barrel according to the value of the regulation of its rotation is installed in order to keep the level of contact constant between the wheel and the edge of the ribbon of glass.

8. The device as claimed in claim 2, **characterized in that** a device for automatic mechanical or electrical correction of the penetration of the barrel according to the value of the regulation of its rotation is installed in order to keep constant in penetration the position of the point of contact between the wheel and the edge of the ribbon of glass.

9. The device as claimed in any one of claims 1 to 8, **characterized in that** the barrel comprises one or a plurality of circuits which make it possible to convey and collect a fluid necessary for the cooling of the wheel and the barrel.

10. The device as claimed in any one of claims 1 to 8, **characterized in that** the barrel comprises one or a plurality of circuits which make it possible to convey and collect a fluid necessary for the cooling of the barrel and the mechanism for rotation of the wheel, with the exception of the wheel, the latter being constituted by a material which is resistant to high temperatures, and not being cooled by one of these circuits.

11. An installation for production of flat float glass, comprising a float chamber containing molten metal on which molten glass in viscous form is made to float and spread, forming a ribbon, **characterized in that** it comprises at least one device for handling of the edge of the ribbon of glass as claimed in any one of claims 1 to 10.
